# FASCICULE DE BREVET EUROPEEN

(11) **EP 3 604 074 B1**
(45) Date de publication et mention de la délivrance du brevet: **28.07.2021**
(21) Numéro de dépôt: 19189676.0
(22) Date de dépôt: 01.08.2019
(51) Int. Cl.: B61D 17/04, B32B 27/38, B32B 7/08

(54) **PROCÉDÉ D'ASSEMBLAGE D'UNE STRUCTURE DE VÉHICULE FERROVIAIRE**
VERFAHREN ZUM ZUSAMMENBAU EINER SCHIENENFAHRZEUG-STRUKTUR
METHOD FOR ASSEMBLING A RAILWAY VEHICLE STRUCTURE

(30) Priorité: 01.08.2018 FR 1857207
(43) Date de publication de la demande: 05.02.2020
(73) Titulaire: ALSTOM Transport Technologies, 93400 Saint-Ouen (FR)
(72) Inventeur: HALLONET, Frédéric, 17220 LA JARNE (FR)
(74) Mandataire: Lavoix

(56) Documents cités:
- EP-A1- 0 622 285
- EP-A1- 0 891 910
- GB-A- 732 645
- JP-A- H1 129 034
- JP-A- 2015 047 887
- US-A- 5 287 814
- US-A- 5 433 151

## Description

La présente invention concerne un procédé d'assemblage d'une structure de véhicule ferroviaire.

Habituellement, afin d'assembler deux panneaux de structure de véhicule ferroviaire, chaque panneau présentant une grande surface, il est nécessaire que les deux surfaces à assembler soient parfaitement planes. Pour ce faire, la surface des panneaux est usinée préalablement à l'assemblage. Cette opération nécessite de grandes machines d'usinage, de lourdes manipulations, et des transports par camion sont souvent nécessaires pour réaliser cette opération d'usinage chez un prestataire équipé de ces moyens.

US 5 287 814 A décrit une structure de véhicule ferroviaire comprenant au moins deux panneaux de structure assemblés au moyen de rivets aveugles, et la structure comprenant une couche de matériau de remplissage prise en sandwich entre les surfaces d'assemblage des deux panneaux de structure assemblés.

L'invention a notamment pour but de simplifier l'assemblage des panneaux de structure de véhicule ferroviaire.

A cet effet, la présente invention a pour objet un procédé d'assemblage d'une structure de véhicule ferroviaire comportant une pluralité de panneaux de structure, le procédé comprenant les étapes successives suivantes :
- fourniture d'au moins deux panneaux de structure de véhicule ferroviaire à assembler, chaque panneau de structure comprenant au moins une surface d'assemblage à l'autre panneau de structure, au moins l'une des surfaces d'assemblage étant pourvue de rugosités,
- application d'une couche de résine à haute performance sur au moins l'une des surfaces d'assemblage, la résine haute performance étant apte à supporter de manière permanente des contraintes de compression supérieures à 90 MPa et présentant des modules d'élasticité en compression supérieurs à 2000 MPa,
- mise en vis-à-vis des surfaces d'assemblage des deux panneaux de structure pour que la couche de résine à haute performance soit prise en sandwich entre les surfaces d'assemblage, et
- polymérisation de la résine à haute performance pour former une structure de véhicule ferroviaire.

Selon des modes de réalisation particuliers de l'invention, le procédé comprend une ou plusieurs des caractéristiques suivantes, prises isolément ou selon toutes les combinaisons techniquement possibles :
- le procédé est dépourvu d'une étape d'usinage des surfaces d'assemblage des panneaux de structure ;
- le procédé est dépourvu d'une étape de chauffage de la résine à haute performance ;
- la résine à haute performance est une résine époxy ;
- le procédé comprend en outre une étape de fixation des surfaces d'assemblage des deux panneaux de structure entre elles par de la visserie simultanément ou consécutivement à la polymérisation de la résine à haute performance ; et
- la structure de véhicule ferroviaire forme au moins une partie d'une caisse structurelle d'une voiture de véhicule ferroviaire et/ou d'une cabine de conduite de véhicule ferroviaire.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique de profil d'une voiture de véhicule ferroviaire comprenant une cabine de conduite et une caisse structurelle, la voiture comprenant une pluralité de panneaux de structure assemblés conformément à un exemple de mode de réalisation du procédé selon l'invention, et
- la Figure 2 est une vue en coupe transversale d'une partie de structure formée par deux panneaux assemblés par le procédé selon l'invention.

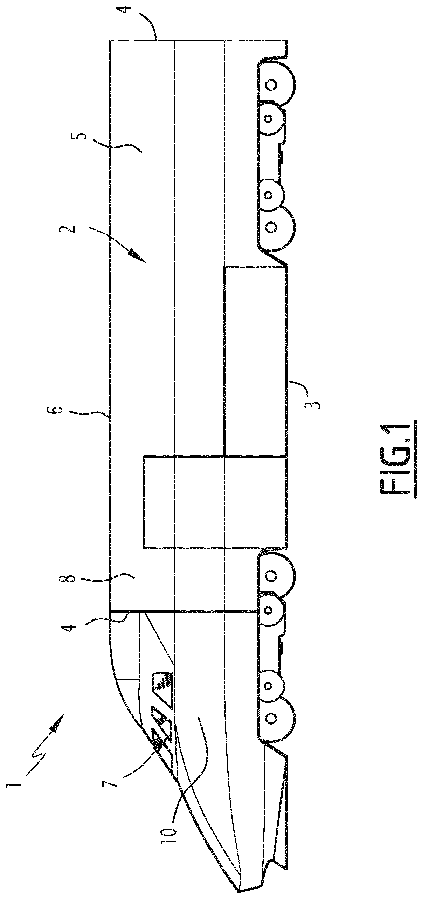

Sur la Figure 1, on a représenté une voiture 1 de véhicule ferroviaire. La voiture 1 comprend une caisse structurelle 2 délimitant un extérieur de la voiture 1 et un intérieur de la voiture 1. La caisse structurelle 2 comprend typiquement un châssis 3, deux extrémités longitudinales 4, deux faces latérales 5 et un pavillon 6.

La voiture 1 comporte par ailleurs une cabine de conduite 7 rapportée sur la caisse structurelle 2.

La caisse structurelle 2 comporte une pluralité de panneaux de structure 8. Avantageusement, la cabine de conduite 7 comporte également une pluralité de panneaux de structure 10.

Les panneaux de structure 8, 10 sont avantageusement réalisés en aluminium, en acier ou en matériau composite.

Les panneaux de structure 8, 10 présentent toute forme techniquement envisageable dans la conception d'une structure de véhicule ferroviaire. Les panneaux de structure 8, 10 présentent chacun une surface plane ou incurvée.

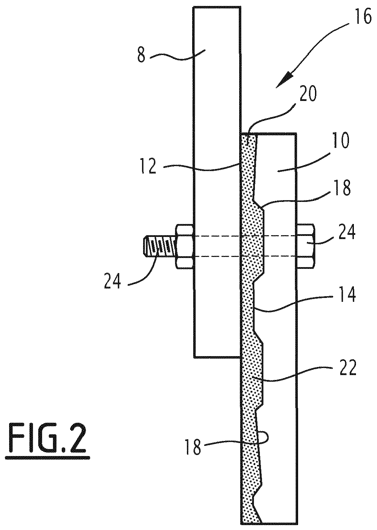

La caisse structurelle 2 et la cabine de conduite 7 sont assemblées au niveau de surfaces d'assemblage 12, 14 représentées sur la Figure 2.

La figure 2 représente une partie d'une structure 16 comprenant un panneau de structure 8 assemblé à un autre panneau de structure 10 par le procédé selon l'invention. Cette structure 16 correspond par exemple à l'interface entre la caisse structurelle 2 et la cabine de conduite 7.

Selon cet exemple, la surface d'assemblage 14 de l'un des panneaux de structure 10 est pourvue de rugosités 18. Par rugosité, il est entendu que la surface d'assemblage 14 n'est pas lisse. La surface d'assemblage 14 n'est par exemple pas usinée.

En variante, les surfaces d'assemblage 12, 14 des deux panneaux de structure 8, 10 sont pourvues de rugosités 18.

Les surfaces d'assemblage 12, 14 de chacun des panneaux de structure 8, 10 sont disposées en vis-à-vis. Une couche 20 de résine à haute performance est prise en sandwich entre les surfaces d'assemblage 12, 14.

Par résine à haute performance, il est entendu une résine apte à supporter de manière permanente des contraintes de compression supérieures à 90 MPa et présentant des modules d'élasticité en compression supérieurs à 2000 MPa.

De préférence, la résine haute performance est une résine époxy.

La résine haute performance selon l'invention a une tenue suffisante pour permettre l'assemblage de surfaces verticales.

La couche 20 de résine à haute performance comble des creux 22 formés par les rugosités 18.

La couche 20 de résine à haute performance présente par exemple une épaisseur maximale comprise entre 3 mm et 15 mm.

La couche 20 de résine à haute performance présente par exemple une épaisseur minimale inférieure à 3 mm.

Selon le mode de réalisation particulier de la figure 2, la structure 16 comprend en outre de la visserie 24 assemblant les panneaux de structure 8, 10.

La visserie 24 comprend par exemple un boulon.

Dans l'exemple représenté, la structure 16 forme une partie de la caisse structurelle 2 et de la cabine de conduite 7 de la voiture 1 assemblée.

En variante, la structure forme au moins une partie d'une caisse structurelle d'une voiture du véhicule ferroviaire.

Selon une autre variante, la structure forme au moins une partie d'une cabine de conduite du véhicule ferroviaire.

Un procédé d'assemblage d'une structure 16 de véhicule ferroviaire selon l'invention va maintenant être décrit. Les panneaux de structure 8, 10 sont fournis.

Chaque panneau de structure 8, 10 présente une surface d'assemblage 12, 14 à l'autre panneau de structure 8, 10. Au moins l'une des surfaces d'assemblage 12, 14 est pourvue de rugosités 18.

Une couche 20 de résine à haute performance est appliquée sur au moins l'une des surfaces d'assemblage 12, 14.

La résine à haute performance est appliquée sur au moins 75 % de l'une des surfaces d'assemblage 12, 14. De préférence, la résine à haute performance est appliquée sur au moins 95 % de l'une des surfaces d'assemblage 12, 14.

En variante, la résine à haute performance est appliquée sur au moins 75 % des deux surfaces d'assemblage 12, 14.

Les surfaces d'assemblage 12, 14 des deux panneaux de structure 8, 10 sont mises en vis-à-vis pour que la couche 20 de résine à haute performance soit prise en sandwich entre les surfaces d'assemblage 12, 14.

Puis la structure 16 formée par les panneaux de structure 8, 10 est laissée au repos pour entrainer une polymérisation de la résine à haute performance. Par exemple, la polymérisation de la résine haute performance dure entre 10 minutes et 8 heures.

De préférence, le procédé d'assemblage est dépourvu d'une étape d'usinage des surfaces d'assemblage 12, 14 des panneaux de structure 8, 10.

De préférence encore, le procédé d'assemblage est dépourvu d'une étape de chauffage de la résine à haute performance. Ainsi, toutes les étapes sont réalisées à température ambiante, et limitent la consommation d'énergie lors de l'assemblage. Par température ambiante, il est entendu une température comprise entre 5°C et 35°C.

Selon un mode de réalisation particulier, le procédé d'assemblage comprend en outre une étape de fixation des surfaces d'assemblage 12, 14 des deux panneaux de structure 8, 10 entre elles par de la visserie 24. Cette étape est simultanée à la polymérisation de la résine à haute performance. En variante ou en complément, cette étape est consécutive à la polymérisation de la résine à haute performance.

Notamment, la visserie 24 est resserrée quelques heures après la mise en vis-à-vis des surfaces d'assemblage 12, 14. Ceci permet de compenser la relaxation inhérente aux produits polymères contenus dans la résine à haute performance.

Le procédé selon l'invention a l'avantage de simplifier l'assemblage des panneaux de structure et de réduire les coûts en supprimant l'usinage des surfaces d'assemblage. La solution rend possible des assemblages de très grande dimension pour lesquels aucune machine n'existait pour réaliser les surfaçages d'interface. En s'intercalant de façon parfaite entre les panneaux de structure à assembler, la résine permet d'obtenir une interface respectant les critères de l'état de l'art des assemblages structuraux.

## Revendications

1. Procédé d'assemblage d'une structure (16) de véhicule ferroviaire comportant une pluralité de panneaux de structure (8, 10), le procédé étant **caractérisé en ce qu'**il comprend les étapes successives suivantes :
- Fourniture d'au moins deux panneaux de structure (8, 10) de véhicule ferroviaire à assembler, chaque panneau de structure (8, 10) comprenant au moins une surface d'assemblage (12, 14) à l'autre panneau de structure (8, 10), au moins l'une des surfaces d'assemblage (12, 14) étant pourvue de rugosités (18),
- application d'une couche (20) de résine à haute performance sur au moins l'une des surfaces d'assemblage (12, 14), la résine haute performance étant apte à supporter de manière permanente des contraintes de compression supérieures à 90 MPa et présentant des modules d'élasticité en compression supérieurs à 2000 MPa,
- mise en vis-à-vis des surfaces d'assemblage (12, 14) des deux panneaux de structure (8, 10) pour que la couche (20) de résine à haute performance soit prise en sandwich entre les surfaces d'assemblage (12, 14),
- polymérisation de la résine à haute performance pour former une structure (16) de véhicule ferroviaire.

2. Procédé selon la revendication 1, **caractérisé en ce qu'**il est dépourvu d'une étape d'usinage des surfaces d'assemblage (12, 14) des panneaux de structure (8, 10).

3. Procédé selon la revendication 1 ou 2, **caractérisé en ce qu'**il est dépourvu d'une étape de chauffage de la résine à haute performance.

4. Procédé l'une quelconque des revendications 1 à 3, **caractérisé en ce que** la résine à haute performance est une résine époxy.

5. Procédé selon l'une quelconque des revendications 1 à 4, **caractérisé en ce qu'**il comprend en outre une étape de fixation des surfaces d'assemblage (12, 14) des deux panneaux de structure (8, 10) entre elles par de la visserie (24) simultanément ou consécutivement à la polymérisation de la résine à haute performance.

6. Procédé selon l'une quelconque des revendications 1 à 5, **caractérisé en ce que** la structure (16) de véhicule ferroviaire forme au moins une partie d'une caisse structurelle (2) d'une voiture (1) de véhicule ferroviaire et/ou d'une cabine de conduite (7) de véhicule ferroviaire.

## Patentansprüche

1. Verfahren zum Montieren einer Schienenfahrzeug-Struktur (16), die eine Mehrzahl von Strukturplatten (8, 10) aufweist, wobei das Verfahren **dadurch gekennzeichnet ist, dass** es die folgenden sukzessiven Schritte aufweist:
- Bereitstellen von wenigstens zwei zu montierenden Schienenfahrzeug-Strukturplatten (8, 10), wobei jede Strukturplatte (8, 10) wenigstens eine Fläche zur Montage (12, 14) an die andere Strukturplatte (8, 10) aufweist, wobei wenigstens eine der Flächen zur Montage (12, 14) mit Unebenheiten (18) versehen ist,
- Aufbringen einer Schicht (20) aus hochfestem Harz auf wenigstens eine der Flächen zur Montage (12, 14), wobei das hochfeste Harz imstande ist, Druckspannungen größer als 90 MPa permanent auszuhalten, und Druck-Elastizitätsmodule größer als 2000 MPa hat,
- Gegenüberlegen der Flächen zur Montage (12, 14) der beiden Strukturplatten (8, 10), sodass die Schicht (20) aus hochfestem Harz zwischen den Flächen zur Montage (12, 14) sandwichartig angeordnet ist,
- Polymerisieren des hochfesten Harzes zum Bilden einer Schienenfahrzeug-Struktur (16).

2. Verfahren gemäß Anspruch 1, **dadurch gekennzeichnet, dass** es keinen Schritt zur spanenden Bearbeitung der Flächen zur Montage (12, 14) der Strukturplatten (8, 10) aufweist.

3. Verfahren gemäß Anspruch 1 oder 2, **dadurch gekennzeichnet, dass** keinen Schritt zur Erwärmung des hochfesten Harzes aufweist.

4. Verfahren gemäß irgendeinem der Ansprüche 1 bis 3, **dadurch gekennzeichnet, dass** das hochfeste Harz ein Epoxidharz ist.

5. Verfahren gemäß irgendeinem der Ansprüche 1 bis 4, **dadurch gekennzeichnet, dass** es ferner aufweist einen Schritt zur Befestigung der Flächen zur Montage (12, 14) der beiden Strukturplatten (8, 10) aneinander mittels Verschraubens (24) zugleich oder aufeinanderfolgend mit dem Polymerisieren des hochfesten Harzes.

6. Verfahren gemäß irgendeinem der Ansprüche 1 bis 5, **dadurch gekennzeichnet, dass** die Schienenfahrzeug-Struktur (16) wenigstens einen Teil eines Strukturkastens (2) eines Schienenfahrzeug-Wagens (1) und/oder eines Schienenfahrzeug-Führerstands (7) bildet.

## Claims

1. Method for assembling a railway vehicle structure (16) comprising a plurality of structural panels (8, 10), the method being **characterised in that** it comprises the following successive steps:
- providing at least two railway vehicle structural panels (8, 10) which are to be assembled, each structural panel (8, 10) comprising at least one assembly surface (12, 14) for assembly with the other structural panel (8, 10), at least one of the assembly surfaces (12, 14) being provided with rough areas (18),
- applying a layer (20) of high-performance resin to at least one of the assembly surfaces (12, 14), the high-performance resin being capable of permanently withstanding compressive stresses greater than 90 MPa and having moduli of elasticity in compression greater than 2000 MPa,
- placing the assembly surfaces (12, 14) of the two structural panels (8, 10) facing one another so that the layer (20) of high-performance resin is sandwiched between the assembly surfaces (12, 14),
- polymerising the high-performance resin to form a railway vehicle structure (16).

2. Method according to claim 1, **characterised in that** it does not comprise a step of machining the assembly surfaces (12, 14) of the structural panels (8, 10).

3. Method according to claim 1 or 2, **characterised in that** it does not comprise a step of heating the high-performance resin.

4. Method according to any one of claims 1 to 3, **characterised in that** the high-performance resin is an epoxy resin.

5. Method according to any one of claims 1 to 4, **characterised in that** it further comprises a step of fixing the assembly surfaces (12, 14) of the two structural panels (8, 10) to one another by means of screws and bolts (24) simultaneously with or following the polymerisation of the high-performance resin.

6. Method according to any one of claims to 1 to 5, **characterised in that** the railway vehicle structure (16) forms at least part of a structural body (2) of a carriage (1) of a railway vehicle and/or of a driver's cab (7) of a railway vehicle.
